# EUROPÄISCHE PATENTSCHRIFT

(11) **EP 3 138 795 B1**
(45) Veröffentlichungstag und Bekanntmachung des Hinweises auf die Patenterteilung: **02.01.2019**
(21) Anmeldenummer: 16175417.1
(22) Anmeldetag: 21.06.2016
(51) Int. Cl.: B65G 47/90, B25J 15/12, B23Q 7/04

(54) **GREIFER UND VERFAHREN ZUR HERSTELLUNG EINES GREIFER**
GRIPPER AND METHOD OF MANUFACTURING A GRIPPER
PINCE ET PROCÉDÉ DE FABRICATION D'UNE PINCE

(30) Priorität: 01.09.2015 DE 102015114580
(43) Veröffentlichungstag der Anmeldung: 08.03.2017
(73) Patentinhaber: Röhm GmbH, 89567 Sontheim (DE)
(72) Erfinder: Schweigert, Eduard, 89428 Syrgenstein (DE)
(74) Vertreter: Hentrich Patentanwälte PartG mbB

(56) Entgegenhaltungen:
- EP-A1- 0 939 044
- DE-A1-102008 055 617
- DE-A1-102010 009 259

## Beschreibung

Die Erfindung betrifft einen Greifer mit zwei Seitenflanken, die einenends mittelbar oder unmittelbar miteinander verbunden sind und zwischen sich einen ein Betätigungsmittel beinhaltenden Raum aufspannen, dessen seitliche Begrenzungen zumindest eine von außen zugängliche Öffnung aufweisen. Mindestens einer der Seitenflanken ist mindestens eine Verstärkungsrippe zugeordnet und zwischen den Seitenflanken ist mit Abstand zu deren freien Enden eine die Seitenflanken miteinander verbindende Tragplatte vorgesehen. Die Erfindung betrifft weiterhin ein Verfahren zur Herstellung eines Greifers.

Greifer der eingangs genannten Art sind aus dem Stand der Technik wohl bekannt und werden von der Anmelderin beispielsweise unter der Bezeichnung RRMG angeboten. Diese Greifer dienen insbesondere dazu, ein Werkstück zu ergreifen und dessen Lage relativ zu einer Bearbeitungs- oder Transporteinrichtung zu verändern. Eingesetzt werden diese Greifer auch, um einen Gegenstand festzuhalten, weil beispielsweise auf ein Gewinde ein Verschluss aufgeschraubt werden soll. Derartige Greifer haben sich in der Praxis bewährt, so dass sich deren Einsatzgebiete kontinuierlich ausgeweitet haben und derartige Greifer auch als Teil von Roboteranlagen aufgefasst werden.

DE 10 2008 055617 A1 zeigt einen einstückig aus Kunststoff gebildeten Greifer zum Ergreifen von Flaschenhälsen. DE 10 2008 055617 A1 offenbart einen Greifer nach dem Oberbegriff des Anspruchs 1. Den Greiferarmen sind gegenpolig angeordnete Permanentmagnete zugeordnet, wodurch auf die Greiferarme eine Schließkraft ausgeübt wird.

Auch die EP 0 939 044 A1 zeigt eine Greifvorrichtung zum Ergreifen von Flaschen. Zur Betätigung der um eine gemeinsame Achse verschwenkbaren Greiferarme wird ein Steuernocken verdreht, der Anlageflächen der Greiferarme beaufschlagt. Durch das Verdrehen des Steuernockens werden die Greiferarme geöffnet und geschlossen.

Diese Greifer haben den Nachteil gezeigt, dass sich ihre das bzw. die Werkstücke ergreifenden Abschnitte beim Spann- bzw. Greifvorgang deformieren bzw. dem Werkstück ausweichen, wenn die Betätigungsmittel eine zu große Kraft auf diese Abschnitte ausüben.

DE 10 2010 009259 A1 zeigt einen Greifer zur Verwendung in der endoskopischen Chirurgie, welcher die Merkmale des Oberbegriffs des Anspruchs 1 aufweist. Dieser Greifer hat den Nachteil gezeigt, dass die an den Greiferarmen angebrachten Verstärkungsrippen die Beweglichkeit des Greifers einschränken.

Der vorliegenden Erfindung liegt daher die Aufgabe zugrunde, bei einem Greifer der eingangs genannten Art die Greifgenauigkeit zu erhöhen bzw. die sich aus dem Stand der Technik ergebenden Nachteile zu beseitigen. Aufgabe der Erfindung ist es weiterhin, ein Verfahren zur Herstellung eines Greifers anzugeben.

Der die Vorrichtung betreffende Teil der Aufgabe wird mit einem Greifer mit dem Merkmalsbestand gemäß Anspruch 1 gelöst.

Das Betätigungsmittel dient dazu, den Greifer zwischen zwei Betriebszuständen zu verstellen, nämlich zwischen der geöffneten Konfiguration, bei der das zu ergreifende Werkstück zwischen den freien Enden der Seitenflanken positioniert wird, und der geschlossenen Konfiguration, bei der das Werkstück ergriffen ist. Zur Verstellung zwischen den beiden Konfigurationen dient das Betätigungsmittel, das insbesondere als Druckmittel betätigter Zylinder realisiert sein kann. Für die Verstellung der Konfiguration des Greifers führt auch das Betätigungsmittel eine Bewegung aus. Durch die Verstärkungsrippe ist gewährleistet, dass sich die freien Enden beim Ergreifen eines Werkstücks nicht verformen und dadurch eine erhöhte Stabilität für die betreffende Seitenflanke bereit gestellt ist. Die freien Enden weichen dadurch beim Greifvorgang auch nicht dem ergriffenen Werkstück aus, wenn durch das Betätigungsmittel ein erhöhter Druck ausgeübt wird. Somit können Werkstücke noch sicherer bzw. noch fester ergriffen werden.

Im Rahmen der Erfindung vorgesehen ist es, wenn zwischen den Seitenflanken mit Abstand zu deren freien Enden eine die Seitenflanken miteinander verbindende Tragplatte vorgesehen ist. Auf diese Tragplatte kann ein Werkstück aufgelegt werden, bevor es anschließend bei Verstellung der Seitenflanken in die geschlossene Konfiguration vom Greifer ergriffen wird.

Im Rahmen der Erfindung ist es daher bevorzugt, wenn die Tragplatte die Betätigungsmittel tragen. Insbesondere hat es sich als vorteilhaft erwiesen, wenn die Betätigungsmittel einenends mit der Tragplatte und anderenends mit einer die Seitenflanken verbindenden Grundplatte gekoppelt ist. Beim Verstellen des Betätigungsmittels erfolgt eine Relativbewegung der Grundplatte bezüglich der Tragplatte, wodurch die Seitenflanken geöffnet und geschlossen werden.

Um die Elastizität des Greifers zu erhöhen, hat es sich als sinnvoll erwiesen, wenn die Tragplatte von der mindestens einen Verstärkungsrippe durchdrungen ist. Somit kann beispielsweise die Seitenflanke vollständig , d.h. entlang der kompletten Seitenflanke, mit einer Verstärkungsrippe geformt sein.

Erfindungsgemäß lässt sich eine Erhöhung der Elastizität des Greifers dadurch erzielen, dass die Tragplatte im Bereich der mindestens einen Verstärkungsrippe eine Freischneidung oder eine Aussparung aufweist. Die Freischneidung oder die Aussparung stellt einen Bewegungsraum für die die Tragplatte durchdringende Verstärkungsrippe bereit, so dass beim Verstellen des Greifers in die geschlossene Konfiguration sich die Verstärkungsrippe innerhalb der Aussparung bzw. der Freischneidung, vorzugsweise frei, bewegen kann. Dadurch ist gewährleistet, dass die Tragplatte der Bewegung der Verstärkungsrippe entgegen wirken und somit den Betätigungsvorgang für das Betätigungsmittel erschweren.

Im Rahmen der Erfindung hat es sich daher als bevorzugt gezeigt, dass die Verstärkungsrippe auf der dem Werkstück zugewandten Seite der Seitenflanken angeordnet ist. Ferner hat es sich als vorteilhaft erwiesen, wenn die mindestens eine Verstärkungsrippe mit zumindest einem der freien Enden im Wesentlichen bündig abschließt. Dadurch kann die Greiffläche des zu ergreifenden Werkstücks erhöht werden, wodurch ein noch sicherer Greifvorgang ermöglicht ist.

Der das Verfahren betreffende Teil der Aufgabe wird gelöst durch ein Verfahren zur Herstellung eines Greifers gemäß Anspruch 5.

Hier werden die Seitenflanken in einem generativen Fertigungsschritt einstückig mit der mindestens einen Verstärkungsrippe hergestellt. Durch dieses Verfahren wird erreicht, dass auch die Kontaktpunkte zwischen den Seitenflanken und der mindestens einen Verstärkungsrippe bereits bei der generativen Fertigung ausgebildet werden und somit das Erfordernis umgangen wird, eine nachträglich Montage der mindestens eine Verstärkungsrippe an den Seitenflanken vorzusehen, da dies einen Schwachpunkt des Greifers darstellen könnte. Auch ist es durch den Einsatz des generativen Fertigungsschrittes erfindungsgemäß vorgesehen, die Seitenflanken mit der Tragplatte einstückig auszubilden, wobei im Kontaktpunkt der Tragplatte mit den Seitenflanken ein innerer Materialquerschnitt derart ausgeformt werden kann, so dass eine hohe Elastizität zwischen den Seitenflanken und der Tragplatte bereitgestellt ist. Zusätzlich werden die Freischneidungen oder Aussparungen durch den generativen Fertigungsprozess auf einfache Weise hergestellt werden, da ein spanabhebendes oder spanfrei schneidendes Werkzeug nur sehr umständlich Aussparungen oder Freischneidungen um die Verstärkungsrippen herum in die Tragplatte einbringen kann. Deren Einsatz könnte auch zu unnötigen Beschädigungen am Greifer führen.

Im Folgenden wird die Erfindung an in den Zeichnungen dargestellten Ausführungsbeispielen näher erläutert; es zeigen:
- Fig. 1: eine perspektivische Ansicht einer ersten Ausführungsform eines erfindungsgemäßen Greifers,

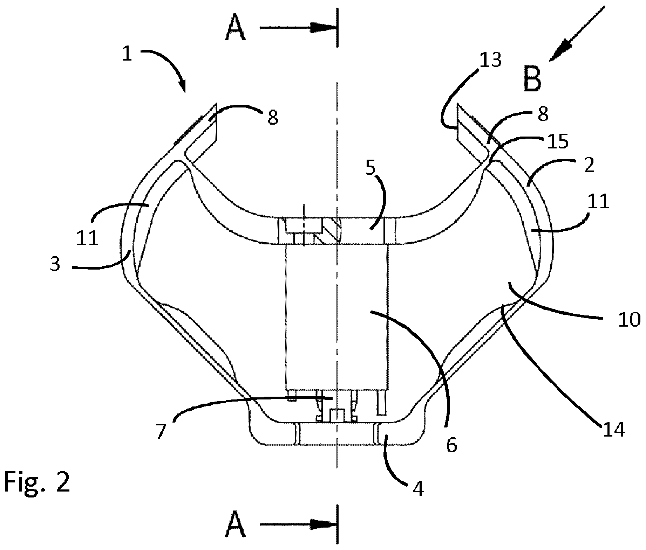

- Fig. 2: eine Vorderansicht des erfindungsgemäßen Greifers aus Figur 1,
- Fig. 3: die Ansicht B aus Figur 2,
- Fig. 4: den Schnitt A-A aus Figur 2, und
- Fig. 5: eine Seitenansicht des erfindungsgemäßen Greifers aus Figur 1 teilweise geschnitten gezeigt.

In der Zeichnung dargestellt ist ein Greifer 1, der zwei Seitenflanken 2, 3 aufweist, die gebogen ausgeführt sind und einenends durch eine Grundplatte 4 miteinander in Verbindung stehen. Zwischen den Seitenflanken 2, 3 mit Abstand zu deren freien Enden ist eine Tragplatte 5 vorgesehen, auf der ein Betätigungsmittel 6 positioniert ist, das bei dem in der Zeichnung dargestellten Ausführungsbeispiel durch einen druckmittelbetätigten Zylinder gebildet ist. Aus diesem Zylinder ist eine translatorisch verstellbare Zylinderstange 7 herausgeführt und an der Grundplatte 4 befestigt, so dass bei einer Verstellung der Zylinderstange 7 der Greifer 1 verformt wird und mit den als Spannbacken 8 fungierenden freien Enden 9 der Seitenflanken 2, 3 ein Werkstück ergriffen werden kann.

Die Seitenflanken 2, 3 spannen zwischen sich einen Raum auf, in dem das Betätigungsmittel 6 angeordnet ist. Dieser durch die Seitenflanken 2, 3 aufgespannte Raum ist sowohl von vorne als auch von hinten offen, besitzt also zwei von außen zugängliche Öffnungen 10. Zur Vermeidung von Verletzungen des Benutzers können diese Öffnungen auch geschlossen oder der gekapselt (z.B. mit einem Gehäuse) ausgeführt sein.

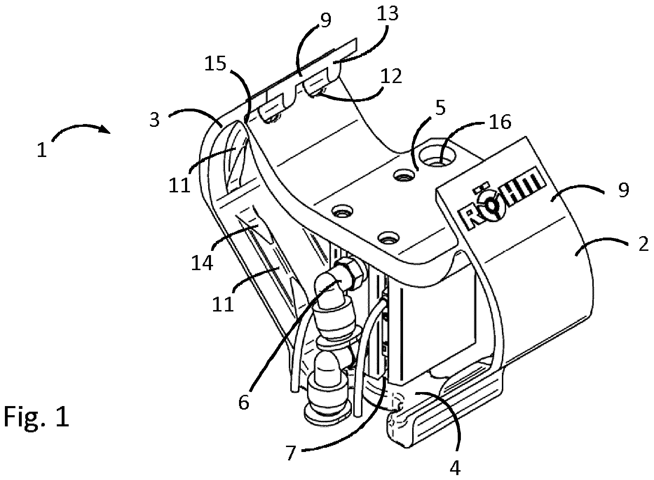

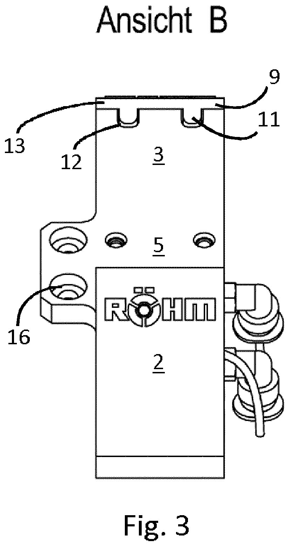

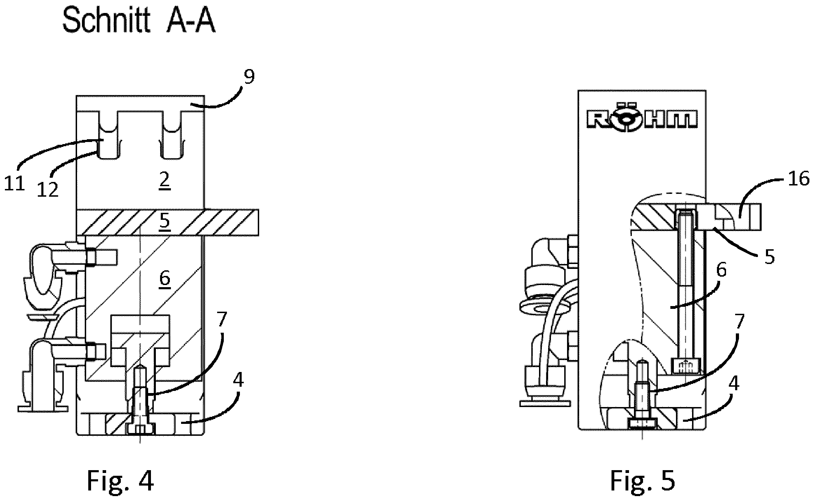

In der Zeichnung ist zu erkennen, dass die Seitenflanken 2, 3 Verstärkungsrippen 11 aufweisen. Die Verstärkungsrippen 11 sind im gezeigten Ausführungsbeispiel auf der dem Werkstück zugewandten Seite der Seitenflächen 2, 3 ausgeprägt bzw. angeordnet. Wie sich insbesondere aus Fig. 1, 3 und 4 entnehmen lässt, ist die Tragplatte 5 im Bereich der Verstärkungsrippen 11 mit einer Aussparung bzw. mit einer Freischneidung 12 versehen derart, dass die Verstärkungsrippen 11 die Tragplatte 5 durchdringen. Zwischen den Verstärkungsrippen 11 und der Tragplatte 5 ist also ein Spiel vorhanden derart, dass bei Betätigung der Betätigungsmittel 6 sich die Verstärkungsrippen 11 innerhalb der Freischneidungen 12 bewegen können, wodurch eine erhöhte Elastizität des Greifers 1 bereit gestellt ist.

Vorliegend sind zwei der Verstärkungsrippen 11 in je einer der Seitenflanken 2, 3 vorgesehen, welche die Tragplatte 5 durchdringen. Diese Verstärkungsrippen 11 schließen bündig mit dem freien Ende 9 der Seitenflanken 2, 3 ab, so dass die Greiffläche 13 an den freien Enden 9 erhöht wird. Die Greiffläche 13 ist zusätzlich erhöht durch die flache Gestaltung des freien Endes 9 der Seitenflanken 2, 3 und der flachen Gestaltung des dem freien Ende 9 zugewandten Abschnitts der Verstärkungsrippe 11. Wie ferner zu erkennen ist, sind zumindest im Bereich der Tragplatte 5 die Verstärkungsrippen 11 - analog zu den Seitenflanken 2, 3 - gebogen ausgeführt. Zusätzlich weisen die Verstärkungsrippen 11 Abflachungen 14 auf, die der Materialermüdung entgegenwirken. Wie zusätzlich zu erkennen ist, sind die Verstärkungsrippen 11 im Querschnitt im wesentlichen rund gebildet, wodurch ebenfalls Ermüdungserscheinungen des Materials reduziert werden können. Eine andere Ausführungsform eines Greifers sieht vor, die Versteifungsrippen 11 mit einem Profil, z.B. mit einem T-Profil auszugestalten, welches die Steifigkeit zusätzlich erhöht.

Der in der Zeichnung dargestellte Greifer 1 wird in einem generativen Fertigungsschritt einstückig mit den Seitenflanken 2, 3 und den Verstärkungsrippen 11 hergestellt, so dass die Kontaktpunkte 15 der Seitenflanken 2, 3 mit den Verstärkungsrippen 11 und Ausnehmungen bzw. Freischneidungen 12 unmittelbar bei der Fertigung ausgebildet werden können. Um die Tragplatte 5 bzw. den Greifer 1 an einem Roboterarm befestigen zu können, sind in der Tragplatte zusätzlich Montageöffnungen 16 ausgeprägt bzw. ausgeformt.

Anschließend wird durch eine Öffnung 10 das Betätigungsmittel 6 eingesetzt und einenends mit der Tragplatte 5 gekoppelt, insbesondere verschraubt.

### Bezugszeichenliste

- 1: Greifer
- 2: Seitenflanke
- 3: Seitenflanke
- 4: Grundplatte
- 5: Tragplatte
- 6: Betätigungsmittel
- 7: Zylinderstange
- 8: Spannbacke
- 9: freies Ende
- 10: Öffnung
- 11: Verstärkungsrippe
- 12: Freischneidung
- 13: Greiffläche
- 14: Abflachung
- 15: Kontaktpunkt (Tragplatte und Seitenflanke)
- 16: Montageöffnung

## Patentansprüche

1. Greifer mit zwei Seitenflanken (2, 3), die einenends mittelbar oder unmittelbar miteinander verbunden sind und zwischen sich einen ein Betätigungsmittel (6) beinhaltenden Raum aufspannen, dessen seitliche Begrenzungen zumindest eine von außen zugängliche Öffnung (10) aufweisen, wobei mindestens einer der Seitenflanken (2, 3) mindestens eine Verstärkungsrippe (11) zugeordnet ist, und wobei zwischen den Seitenflanken (2, 3) mit Abstand zu deren freien Enden (9) eine die Seitenflanken (2, 3) miteinander verbindende Tragplatte (5) vorgesehen ist,
**dadurch gekennzeichnet, dass** die Tragplatte (5) von der mindestens einen Verstärkungsrippe (11) durchdrungen ist, und dass die Tragplatte (4) im Bereich der mindestens einen Verstärkungsrippe (11) eine Freischneidung (12) oder eine Aussparung aufweist.

2. Greifer nach Anspruch 1, **dadurch gekennzeichnet, dass** das Betätigungsmittel (6) von der Tragplatte (5) getragen ist.

3. Greifer nach Anspruch 1 oder 2, **dadurch gekennzeichnet, dass** das Betätigungsmittel (6) einenends mit der Tragplatte (5) und anderenends mit einer die Seitenflanken (2, 3) verbindenen Grundplatte (4) gekoppelt ist.

4. Greifer nach einem der Ansprüche 1 bis 3, **dadurch gekennzeichnet, dass** die mindestens eine Verstärkungsrippe (11) mit zumindest einem der freien Enden (9) im Wesentlichen bündig abschließt.

5. Verfahren zur Herstellung eines Greifers nach den Ansprüchen 1 bis 4, **dadurch gekennzeichnet, dass** die Seitenflanken (2, 3) in einem generativen Fertigungsschritt einstückig mit der mindestens einen Verstärkungsrippe (11) und mit der Tragplatte (5) hergestellt werden, wobei unmittelbar auch die Freischneidungen (12) oder Aussparungen in der Tragplatte (5) ausgebildet werden, und wobei die Verstärkungsrippe (11) die Tragplatte (5) durchdringt.

## Claims

1. Gripper with two side flanks (2, 3), which are connected to one another at one end indirectly or directly, and which span a space between them which contains an actuating means (6), the side delimitations of which comprise at least one opening (10) accessible from the outside, wherein at least reinforcing rib (11) is allocated to at least one of the side flanks (2, 3), and wherein a carrier plate (5) is provided between the side flanks (2, 3), connecting the side flanks (2, 3) to one another, at a distance interval from their free ends (9),
**characterised in that** the carrier plate (5) is penetrated by the at least one reinforcing rib (11), and that the carrier plate (4) comprises in the area of the at least one reinforcing rib (11) a cut-out (12) or recess.

2. Gripper according to claim 1, **characterised in that** the actuating means (6) is carried by the carrier plate (5).

3. Gripper according to claim 1 or 2, **characterised in that** the actuating means (6) is coupled at one end to the carrier plate (5) and at the other end to a base plate (4) which connects the side flanks (2, 3).

4. Gripper according to any one of claims 1 to 3, **characterised in that** the at least one reinforcing rib (11) terminates essentially flush with at least one of the free ends (9).

5. Method for producing a gripper according to claims 1 to 4, **characterised in that** the side flanks (2, 3) are produced in one generative manufacturing step as one piece with the at least one reinforcing rib (11) and with the carrier plate (5), wherein the cut-outs (12) or recesses in the carrier plate (5) are also formed directly, and wherein the reinforcing rib (11) penetrates the carrier plate (5).

## Revendications

1. Pince comprenant deux flancs latéraux (2, 3) qui, à une de leurs extrémités, sont reliés entre eux indirectement ou directement et définissent entre eux un espace qui contient un moyen d'actionnement (6) et dont les limitations latérales sont pourvues d'au moins une ouverture (10) accessible de l'extérieur, au moins une nervure de renfort (11) étant associée à au moins un des flancs latéraux (2, 3), et entre les flancs latéraux (2, 3) étant prévue, à distance de leurs extrémités libres (9), une plaque porteuse (5) reliant les flancs latéraux (2, 3) entre eux, **caractérisée en ce que** la plaque porteuse (5) est traversée par la au moins une nervure de renfort (11), et **en ce que**, dans la zone de la au moins une nervure de renfort (11), la plaque porteuse (4) est pourvue d'une échancrure (12) ou d'un évidement.

2. Pince selon la revendication 1, **caractérisée en ce que** le moyen d'actionnement (6) est porté par la plaque porteuse (5).

3. Pince selon la revendication 1 ou 2, **caractérisée en ce que** le moyen d'actionnement (6) est couplé, à l'une de ses extrémités, avec la plaque porteuse (5) et, à son autre extrémité, avec une plaque de base (4) reliant les flancs latéraux (2, 3).

4. Pince selon une des revendications 1 à 3, **caractérisée en ce que** la au moins une nervure de renfort (11) se termine sensiblement au niveau d'au moins une des extrémités libres (9).

5. Procédé de fabrication d'une pince selon les revendications 1 à 4, **caractérisé en ce que**, dans une étape de fabrication générative, les flancs latéraux (2, 3) sont fabriqués d'un seul tenant avec la au moins une nervure de renfort (11) et avec la plaque porteuse (5), les échancrures (12) ou évidements étant eux aussi ménagés directement dans la plaque porteuse (5), et la nervure de renfort (11) traversant la plaque porteuse (5).
